# EUROPEAN PATENT APPLICATION

(11) **EP 3 418 900 A1**
(43) Date of publication of application: **26.12.2018**
(21) Application number: 18177881.2
(22) Date of filing: 14.06.2018
(51) Int. Cl.: G06F 13/38

(54) **STANDALONE FLIGHT MANAGEMENT SYSTEM INTERFACING DEVICES, SYSTEMS AND METHODS**

(30) Priority: 20.06.2017 US 201762522262 P; 21.09.2017 US 201715711559
(71) Applicant: Honeywell International Inc., Morris Plains, NJ New Jersey 07950 (US)
(72) Inventor: LOOTS, Dennis David, Morris Plains, NJ New Jersey 07950 (US); HILLER, John, Morris Plains, NJ New Jersey 07950 (US); PEWSEY, William, Morris Plains, NJ New Jersey 07950 (US)
(74) Representative: Houghton, Mark Phillip

(57) **Abstract**

Aircraft systems and related methods and devices are provided for supporting a standalone or external flight management system (FMS) line replaceable unit (LRU) (108) using another LRU (102) onboard the aircraft. In one embodiment, the hosting LRU (102, 202, 302) includes a communications interface for coupling to a FMS LRU (108, 308), a first card (310, 500) coupled to the communications interface and including shared memory communicatively coupled to a shared memory interface (314, 512), and a flight guidance card (112, 312) communicatively coupled to one or more onboard systems (104, 304) to obtain operational data for the aircraft from the one or more onboard systems (104, 304) and provide the operational data to the first card (310, 500) via the shared memory interface (314, 512), wherein the first card (310, 500) is configured to retransmit the operational data to the FMS LRU (108, 308) via the communications interface.

## Description

### CROSS-REFERENCE TO RELATED APPLICATION

This application claims the benefit of United States provisional patent application serial number 62/522,262, filed June 20, 2017 and United States patent application serial numbers 15/711,559 filed September 21, 2017.

### TECHNICAL FIELD

The subject matter described herein relates generally to avionics systems, and more particularly, embodiments of the subject matter relate to upgrading flight management capabilities onboard an aircraft.

### BACKGROUND

Most modern aircraft include a flight management system (FMS) to support increased automation and reduce flight crew workload. Once installed, the FMS can be difficult to modify or replace. For example, in many instances, retrofitting an aircraft often entails costly hardware upgrades, wiring upgrades, hull changes, and potentially other modifications to integrate newer systems. Often, cockpits also have limited space available to accommodate upgrades. Accordingly, in many instances, upgrading the FMS in existing aircraft installations is cost prohibitive, thereby depriving those aircraft of modern flight management functionality which could otherwise improve operational safety and/or performance.

In some aircraft, the FMS is implemented using a dedicated computer card hosted in a line replaceable unit (LRU) that also contains other functionality, such as, for example, flight guidance and control, flight envelope protection, and the like. In such a configuration, the FMS must be certified as part of the larger hosting LRU subsystem. This increases cost and time to market for new concepts.

Accordingly, it is desirable to upgrade existing aircraft to support modern flight management functionality in a manner that reduces time to market and is not cost prohibitive. Other desirable features and characteristics will become apparent from the subsequent detailed description and the appended claims, taken in conjunction with the accompanying drawings and the foregoing technical field and background.

### BRIEF SUMMARY

Aircraft systems and related devices and methods are provided for supporting a standalone or external flight management system (FMS) line replaceable unit (LRU) using an existing LRU onboard the aircraft. In one embodiment, a hosting LRU includes a communications interface for coupling to a FMS LRU, a first card coupled to the communications interface and including shared memory communicatively coupled to a shared memory interface, and a second card communicatively coupled to one or more onboard systems to obtain operational data for the aircraft from the one or more onboard systems and provide the operational data to the first card via the shared memory interface, wherein the first card is configured to retransmit the operational data to the FMS LRU via the communications interface.

In one embodiment, a method of operating an aircraft comprises coupling a FMS LRU to a communications interface of a second LRU onboard the aircraft and reprogramming a FMS card of the second LRU to communicate operational data obtained by the second LRU from one or more avionics LRUs onboard the aircraft to the FMS LRU.

In another embodiment, a method of operating an aircraft comprises coupling FMS LRU to a communications interface of a second LRU onboard the aircraft and replacing a FMS card of the second LRU with a data concentrator card or other intermediary input/output (I/O) card configured to communicate operational data obtained by the second LRU from one or more avionics LRUs onboard the aircraft to the FMS LRU.

In one embodiment of an aircraft system, an existing FMS card within a hosting LRU is repurposed or reprogrammed to act as a data source, sink, or concentrator for communicating data with an external FMS LRU or other device through a high speed interface or link.

In another embodiment of an aircraft system, an existing FMS card within a hosting LRU is replaced with a new card configured to act as a data source, sink, or concentrator for communicating data with an external FMS LRU or other device through a high speed interface or link.

In another embodiment, an apparatus for an external FMS interfacing device is provided. The interfacing device includes a data storage element having a shared memory region, a shared memory interface to write current operational data pertaining to an aircraft to the shared memory region, external interfacing circuitry to support an external interface, and a control module coupled to the data storage element and the external interfacing circuitry to periodically poll the shared memory region to obtain the current operational data and transmit the current operational data to an external FMS using the external interface.

Other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following figures, wherein like numerals denote like elements, and wherein:
FIG. 1 is a block diagram illustrating an aircraft system in accordance with one or more exemplary embodiments;
FIG. 2 is a block diagram illustrating an aircraft system in accordance with one or more exemplary embodiments;
FIG. 3 is a block diagram illustrating an aircraft system in accordance with one or more exemplary embodiments;
FIG. 4 is a flow diagram illustrating a data communications process suitable for implementation by any of the aircraft systems of FIGS. 1-3 in accordance with one or more exemplary embodiments;
FIG. 5 is a block diagram of an external flight management system (FMS) interfacing device capable of supporting the data communications process of FIG. 4 and suitable for use in a flight management and guidance computer line replaceable unit in any one of the aircraft systems of FIGS. 1-3 in accordance with one or more exemplary embodiments; and
FIG. 6 is a block diagram of an FMS card suitable for use in an external FMS line replaceable unit (LRU) in any one of the aircraft systems of FIGS. 1-3 in accordance with one or more exemplary embodiments.

### DETAILED DESCRIPTION

The following detailed description is merely exemplary in nature and is not intended to limit the subject matter of the application and uses thereof. Furthermore, there is no intention to be bound by any theory presented in the preceding background, brief summary, or the following detailed description.

Embodiments of the subject matter described herein relate to updating or upgrading vehicle systems by reconfiguring an existing module to support a new module to be integrated, incorporated, or otherwise instantiated for interoperability and use with other existing components of the vehicle system. For purposes of explanation, the subject matter is described herein primarily in the context of aircraft, however, the subject matter is not necessarily limited to use with aircraft and may be implemented in an equivalent manner for other types vehicles (e.g., automotive vehicles, marine vessels, or the like).

As described in greater detail below, the subject matter allows a flight management system (FMS) or other such devices to be integrated into an aircraft with minor changes to the existing equipment and without extensive rewiring of the aircraft for retrofitting. This allows the FMS to be independently updated, which increases the value of the aircraft and reduces retrofitting costs.

In one or more embodiments, the FMS is hosted within an LRU including a flight guidance computing module (FGC), where data is exchanged between the FMS and the FGC through a shared common memory interface hosted on the FMS computer card (or cardset). The exchanged data may include, without limitation, information and signals received from external devices which are received by the FGC the hosting LRU and subsequently transmitted to the FMS through the shared memory interface, information and signals to be transmitted to external devices and other LRUs by the FMS that is initially sent to the FGC through the shared memory interface and subsequently retransmitted to the external LRU(s), and data exchanged between the FMS and FGC in the performance of their respective functions.

In exemplary embodiments, a new high speed interface is defined or otherwise defined that supports an external standalone FMS LRU with minor changes to the hosting LRU. For example, in one embodiment, the legacy FMS within the hosting LRU can be reprogrammed or otherwise repurposed to function as a data source, sink or concentrator for transmitting and receiving data between it and an external FMS LRU through a high speed interface or link. This can be done by modifying the software within the existing FMS card without any additional hardware changes, so that the hosting LRU hardware configuration remains unchanged. In another embodiment, the legacy FMS card within the hosting LRU is replaced with a new card configured to function as data source, sink or concentrator for transmitting and receiving data between it and an external FMS LRU through a high speed interface or link, while also hosting a shared common memory interface for communicating with the FGC. This makes the interface between the existing host LRU and an external FMS LRU transparent while also leaving the hosting LRU and FGC hardware and software unchanged.

The approach of either repurposing the existing FMS card or replacing it by a dedicated data concentrator card (or gateway card) to interface with an external FMS LRU would present significant cost savings in leaving the FGC functionality and hardware intact and not having to recertify the FGC functionality. Additionally, an updated FMS LRU can be integrated into an existing aircraft platform to provide significantly enhanced capability and future growth in both hardware and software as well as ease of replacement in the future. In this regard, the FMS software hosted in an external LRU can be independently updated while reducing or eliminating any overhead associated with testing the coordination between the FGC and the FMS.

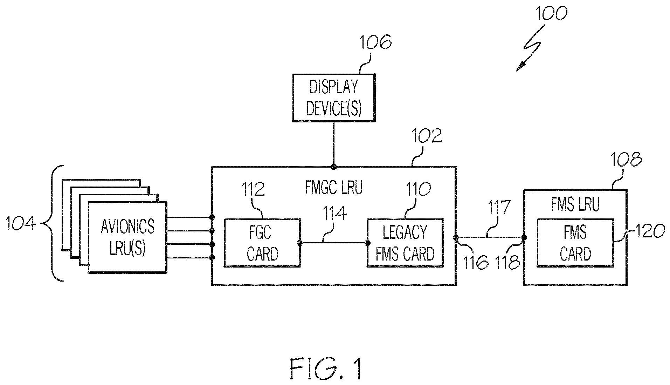

FIG. 1 depicts an exemplary embodiment of an aircraft system 100 including a LRU 102 including an existing or legacy FMS card 110 and a flight guidance computer card 112 (or FGC card), where the FMS card 110 is configured to support an external FMS LRU 108. In this regard, the legacy FMS card 110 is reprogrammed or reconfigured to communicate data between the existing onboard avionics systems or line-replaceable units (LRUs) 104, via the FCG card 112 and a shared interface 114, to the external FMS LRU 108, which includes an FMS card 120 capable of providing enhanced or upgraded flight management functionality not supported by the legacy FMS card 110.

The FGC card 112 generally represents a computer card (or cardset) or other integrated electronics that includes the combination of hardware, circuitry, logic, software, firmware and/or other components configured to provide flight guidance and control functionality (e.g., by commanding or controlling one or more avionics systems 104 to implement autopilot functionality), and in some embodiments, may also provide flight envelope protection (e.g., a flight guidance and envelope protection (FGE) card). Similarly, the legacy FMS card 110 generally represents a computer card (or cardset) that includes the combination of hardware, circuitry, logic, software, firmware and/or other components originally configured to provide flight management commands, controls, data and/or information to the FGC card 112, onboard displays 106 and/or onboard avionics LRUs 104. In this regard, in one or more exemplary embodiments, the legacy FMS card 110 is reprogrammed or otherwise reconfigured to provide data concentrator or gateway functionality in lieu of the legacy FMS functionality. In exemplary embodiments, the legacy FMS card 110 includes memory coupled to the FGC card 112 via the shared interface 114, alternatively referred to as flight management/flight guidance (FM/FG) common memory.

The flight management and guidance computer (FMGC) LRU 102 generally represents a housing, box, or other compartment or container for the cards 110, 112, and the FMGC LRU 102 includes a port, socket, terminal, pin, channel, connector, or other communications interface 116 that supports communicatively coupling the FMGC LRU 102 to a corresponding communications interface 118 of the FMS LRU 108 via a bus, cabling, wiring, or other electrical connection 117. In exemplary embodiments, the electrical connection 117 is capable of achieving greater throughput than the common memory interface 114, and accordingly, may alternatively be referred to herein as a high speed interface 117. In some embodiments, the electrical connection 117 may also be capable of achieving greater throughput than the avionics buses coupling the FMGC LRU 102 to other onboard avionics systems 104 or display devices 106. In one embodiment, the high speed interface 117 is realized as an Ethernet cable.

In exemplary embodiments, the FMS LRU 108 is realized as a housing, box, or other compartment or container for the FMS card 120 that is separate and distinct from the FMGC LRU 102. The FMS card 120 generally represents a computer card (or cardset) that includes the combination of hardware, circuitry, logic, software, firmware and/or other components coupled to the legacy FMS card 110 via the high speed interface 117 that are configured to provide flight management functionality within the aircraft system 100. In this regard, the FMS card 120 supports one or more flight management algorithms that receive data pertaining to the current operation of the aircraft from the avionics LRUs 104 via the legacy FMS card 110 and high speed interface 117 and analyze or process the data to generate corresponding flight management commands or data provided back to the legacy FMS card 110 via the high speed interface 117 for implementation by the FGC card 112 and/or avionics LRUs 104 or for presentation on onboard display devices 106. In exemplary embodiments, the FMS card 120 is configured to provide new, modern, upgraded, or enhanced flight management functionality that is not otherwise supported by the legacy FMS card 110, such as, for example, required navigation performance (RNP), localizer performance with vertical guidance (LPV) approach functionality, and the like.

It should be appreciated that FIG. 1 is a simplified representation of an aircraft system 100 for purposes of explanation and is not intended to be limiting. In this regard, the avionics LRUs 104 generally represent the electronic components or modules installed onboard the aircraft that support navigation, flight planning, and other aircraft control functions in a conventional manner and/or provide real-time data and/or information regarding the operational status of the aircraft. For example, practical embodiments of the aircraft system 100 will likely include one or more of the following avionics LRUs 104 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system. The display device(s) 106 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMGC.

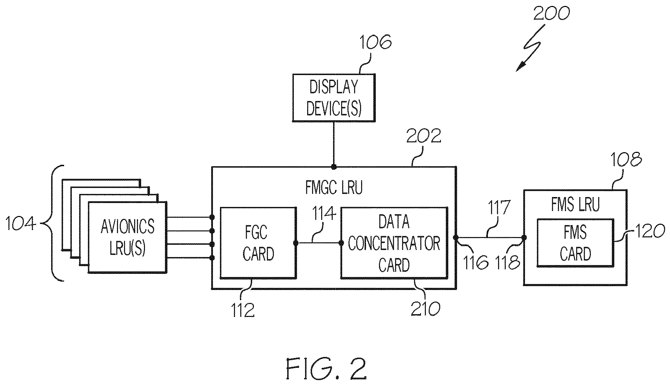

FIG. 2 depicts another exemplary embodiment of an aircraft system 200 including a LRU 202 that supports an external FMS LRU 108. In the embodiment of FIG. 2, the legacy FMS card of the FMGC LRU 202 is replaced by a data concentrator card 210. The data concentrator card 210 generally represents the combination of hardware, circuitry, logic, software, firmware and/or other components configured to function as an intermediary data concentrator or gateway that communicates data to/from the external FMS LRU 108. In this regard, the data concentrator card 210 may include a common or shared memory coupled to or otherwise accessible by the FGC card 112 via the common memory interface 114 as described herein.

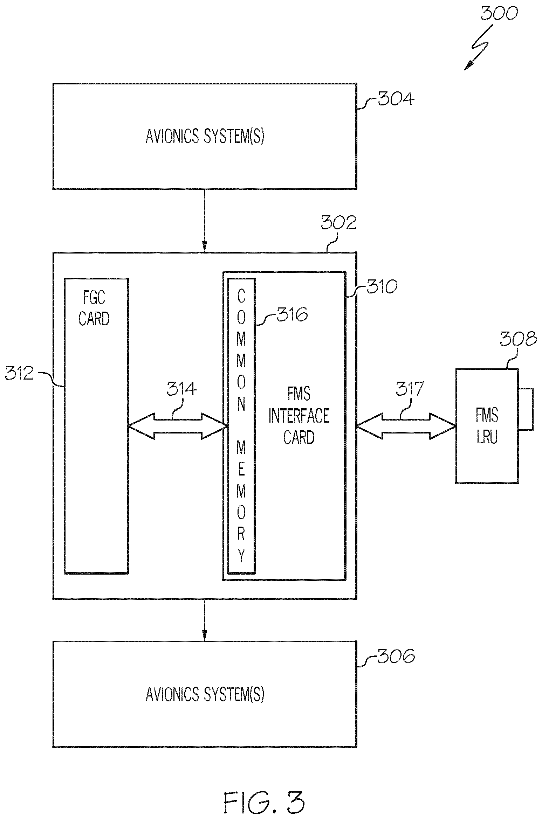

FIG. 3 depicts another exemplary embodiment of an aircraft system 300 including a FMGC LRU 302 configured to support a standalone FMS LRU 308. In a similar manner as described above, the FMGC LRU 302 includes a FGC card 312 coupled to common memory 316 of an external FMS interfacing card 310 via a shared common memory interface 314. Depending on the embodiment, the card 310 can be realized as a legacy FMS card 110 or a data concentrator card 210 configured to provide input/output (I/O) functionality between the FGC card 312 and the FMS LRU 308. The intermediary interfacing card 310 is coupled to the FMS LRU 308 via Ethernet or another suitable high speed interface. The FMGC LRU 302 is coupled to onboard avionics systems 304, 306 via avionics interfaces, such as a data bus supporting communications in accordance with the ARINC 429 (A429) standard.

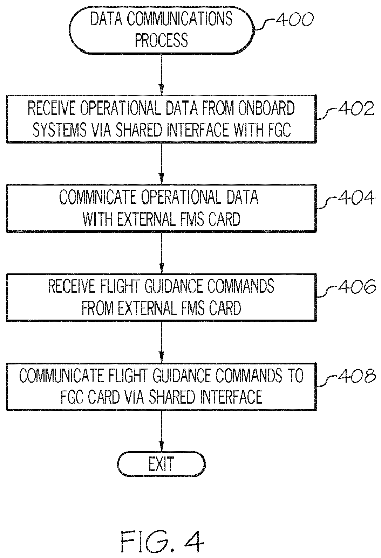

FIG. 4 depicts a data communications process 400 suitable for implementation by a legacy FMS card 110 or a data concentrator card 210 in a LRU 102, 202, 302 including a FGC card 112 to support an external FMS LRU 108, 308. It should be appreciated that the data communications process 400 may include any number of additional or alternative tasks, the tasks need not be performed in the illustrated order and/or the tasks may be performed concurrently, and/or the data communications process 400 may be incorporated into a more comprehensive procedure or process having additional functionality not described in detail herein. Moreover, one or more of the tasks shown and described in the context of FIG. 4 could be omitted from a practical embodiment of the data communications process 400 as long as the intended overall functionality remains intact.

The illustrated data communications process 400 begins with a card 110, 210, 310 receiving or otherwise obtaining operational data or other information characterizing current operations of the aircraft from an onboard system via a shared interface 114, 314 with a flight guidance component 112, 312 and retransmitting or otherwise communicating the operational data with the external FMS (tasks 402, 404). In this regard, the FGC card 112, 312 receives or otherwise obtains operational data from an avionics LRU 104 that characterizes or quantifies the current operation or current status of the aircraft via an avionics interface and provides the data via the shared memory interface 114, 314 to the legacy FMS card 110 or data concentrator card 210. In one embodiment, the FGC card 112, 312 writes or otherwise stores the operational data at the appropriate location for that particular type of data in the shared memory of the FMS card 110 or data concentrator card 210 that is coupled to the shared memory interface 114, 314. For example, a current airspeed for the aircraft may be written to a dedicated register or location in the common memory 316 of the FMS card 110 or data concentrator card 210 that can be referenced by the external FMS card 120 to retrieve the current airspeed.

The FMS card 110 or data concentrator card 210 transmits or otherwise provides the operational data to the FMS card 120 of the FMS LRU 108, 308 via the communications interface 117, 317. In some embodiments, the FMS card 120 transmits or otherwise provides, to the FMS card 110 or data concentrator card 210, a request for a particular type of operational data via the high speed interface 117, 317, and in response, the FMS card 110 or data concentrator card 210 retrieves the requested operational data from its shared memory region 316 and transmits or otherwise provides the requested operational data back to the FMS card 120 via the high speed interface 117, 317. In some embodiments, the FMS card 110 or data concentrator card 210 may reformat, transcode, or reconfigure the operational data prior to transmission via the high speed interface 117, 317. For example, operational data may be received from an avionics LRU 104 in a particular format according to the avionics bus communications protocol or standard utilized for that avionics LRU 104, with the FMS card 110 or data concentrator card 210 being configured to convert the operational data from the avionics bus communications format to another format suitable for communications over the high speed interface 117, 317 prior to transmission to the FMS card 120.

The data communications process 400 continues by receiving or otherwise obtaining flight guidance commands or other data or information for achieving desired flight management functionality from the external FMS and retransmitting or otherwise communicating the flight guidance commands or other flight management data to the FGC for execution or implementation (tasks 406, 408). In this regard, the FMS card 120 implements or otherwise performs one or more flight management algorithms on or using the operational data received from the avionics LRUs 104 via the FMGC LRU 102, 202, 302 to generate corresponding flight guidance commands for autonomously operating the aircraft in a manner that is influenced by or otherwise responsive to the current operational status of the aircraft. The FMS card 120 may transmit or otherwise provide the flight guidance commands back to the FMGC LRU 102, 202, 302 via the high speed interface 117, 317. The legacy FMS card 110 or data concentrator card 210 receives the flight guidance commands and stores or otherwise maintains the flight guidance commands in the appropriate location(s) of its shared memory 316. Additionally, in some embodiments, the legacy FMS card 110 or data concentrator card 210 may set a flag or otherwise indicate or notify the FGC card 112, 312 of the existence of new or updated flight guidance commands, which, in turn, may be retrieved by the FGC card 112, 312 from the shared memory of the legacy FMS card 110 or data concentrator card 210 via the shared interface 114, 314. The FGC card 112, 312 then implements the flight guidance commands to autonomously operate the aircraft, for example, by instructing or otherwise commanding one or more of the avionics LRUs 104 to alter, adjust, or otherwise modify their respective operations in a manner that achieves autonomous flight in accordance with the flight guidance commands, thereby enabling updated or enhanced FMS capabilities available on an external FMS LRU 108, 308 to be implemented or otherwise realized using a legacy FGC card 112, 312 and/or a legacy FMGC LRU 102, 202, 302 that is already certified and/or installed onboard the aircraft.

In accordance with one or more embodiments, rather than reprogramming a legacy FMS card 110 or substituting a data concentrator card 210 for a legacy FMS card 110, a communications interface may be established between the FMS LRU 108 and the FGC card 112. For example, the FGC card 112 could be communicatively coupled to an interface 116, such as an Ethernet port, capable of supporting a connection 117 with the FMS LRU 108 directly. In such embodiments, the Ethernet connection 117 could function analogously to the shared memory interface 114, with the FMS card 120 or other component of the FMS LRU 108 providing the functionality of the shared memory 316. In such an embodiment, a legacy FGC card 112 could be reprogrammed or reconfigured to communicate via the connection 117 as if it were the shared memory interface 114, for example, by reading and/or writing data to the appropriate shared memory locations at the FMS LRU 108.

In accordance with one or more embodiments, the FMS card 120 is equipped with multiple processors (or processing units or processing architectures). For example, in one embodiment, the FMS card 120 includes one processor dedicated to communications and supporting I/Os between the FMS card 120 and the communications interface 118. In such embodiments, one or more other processors of the FMS card 120 may be dedicated to performing flight management algorithms or functionality (e.g., FM processors) using operational data received via the I/O processor. The FMS LRU 108 may also include additional avionics interfaces capable of being coupled to one or more avionics LRUs 104 or display devices 106, whereby the I/O processor on the FMS card 120 manages communications between the various onboard systems as well as with the FMGC LRU 102, 202, 302. For example, the I/O processor on the FMS card 120 could support ARINC A429 interfaces, ARINC A661 interfaces, and/or other avionics bus interfaces, in addition to an Ethernet or other communications interface 118. In one embodiment, the I/O processor and/or FMS LRU 108, 308 is configured to support only display interfaces (e.g., A661 interfaces), while all other flight management data or commands destined for avionics LRUs 104 coupled to other avionics bus interfaces (e.g., A429 interfaces) are communicated via the communications interface 118 and the FMGC LRU 102, 202.

By virtue of the subject matter described herein, legacy aircraft may be upgraded or otherwise updated by utilizing the legacy FMS card as a data concentrator or replacing the legacy FMS card with a data concentrator card that manages communications between existing or legacy onboard components and a standalone FMS LRU that provides upgraded flight management functionality. The existing FMGC LRU, existing avionics LRUs, and existing wiring, cables, or buses there between do not necessarily require hardware modifications to support the upgraded functionality.

In exemplary embodiments, the standalone FMS LRU supporting upgraded FMS functionality is connected to the FMGC LRU, which communicates data between the FMS LRU and the existing onboard avionics LRUs and/or displays. In this regard, the standalone FMS LRU providing upgraded functionality can be integrated into a legacy system using a single communications interface with the FMGC LRU and does not need to be individually connected to the various other onboard systems. The FMS LRU can perform upgraded flight planning, performance, or other flight management functionality at the FMS LRU based on data received from the FMGC LRU, and the FMS LRU can then provide corresponding flight management commands or data back to the FMGC LRU for retransmission to the desired destination system onboard the aircraft. In this regard, the FMS LRU may have more advanced hardware or computational capabilities than a legacy FMS card, and support more complex flight management functionality with reduced computational time required. Accordingly, the subject matter described herein solves the problem of upgrading legacy aircraft to support modern or up-to-date flight management functionality without modifications to the existing wiring, cables, buses or other hardware already installed onboard the aircraft and without requiring replacement or upgrading of the existing FMS card.

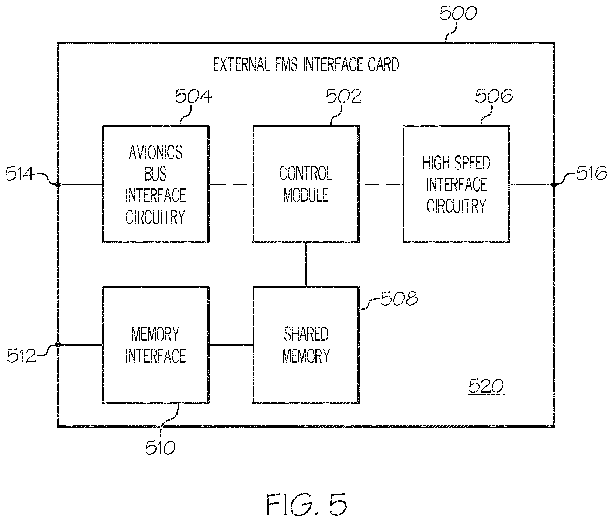

FIG. 5 depicts an exemplary embodiment of an external FMS interfacing device 500 suitable for use as the data concentrator card 210 in the aircraft system 200 of FIG. 2 or the card 310 in the aircraft system 300 of FIG. 3. The external FMS interfacing device 500 could also be utilized in lieu of the legacy FMS card 110 in the aircraft system 100 of FIG. 1, for example, by removing the legacy FMS card 110 from its corresponding slot or port within the housing or container of the FMGC LRU 102 and inserting or otherwise installing the external FMS interfacing device 500 in the slot or port of the FMGC LRU 102 that was previously occupied by and/or coupled to the legacy FMS card 110. In this regard, exemplary embodiments of the external FMS interfacing device 500 may be realized as a computer card, integrated circuit, or other integrated electronic component or unit that may be provided within an FMGC LRU 102 to support an external FMS. Accordingly, the external FMS interfacing device 500 may alternatively be referred to herein as an external FMS interface card.

The illustrated external FMS interfacing card 500 includes, without limitation, a control module 502, avionics bus interface circuitry 504, external FMS interfacing circuitry 506, and a data storage element 508 configured to provide a shared memory (e.g., memory 316) that is externally accessible via a shared memory interface circuitry 510. In one or more embodiments, the elements 502, 504, 506, 508, 510 of the external FMS interfacing card 500 are mounted to, affixed to, soldered to, or otherwise provided on a common circuit board or other suitable electronics substrate 520. In this regard, the substrate 520 may include includes conductive traces, wiring, or other electrical interconnects that communicatively couple the elements 502, 504, 506, 508, 510 of the external FMS interfacing card 500 to one another. In some embodiments, the elements 502, 504, 506, 508, 510 of the external FMS interfacing card 500 may be encapsulated or otherwise contained within a common housing.

The avionics bus interface circuitry 504 generally represents the hardware, logic, circuitry, firmware and/or software configured to support communications over one or more avionics buses coupled to corresponding avionics bus interfaces 514 of the external FMS interfacing card 500 in accordance with a corresponding avionics bus protocol. In this regard, the avionics bus interface circuitry 504 may include one or more transmitters, receivers, transceivers, drivers, modulators, demodulators, multiplexers, and the like. For example, in one embodiment, the avionics bus interface circuitry 504 may include electronics hardware and corresponding firmware and/or software for supporting the ARINC 429 (A429) standard when communicating data to/from the external FMS interfacing card 500 via the avionics bus interfaces 514. The avionics bus interfaces 514 generally represent the pins, pads, ports, sockets, terminals, or other electrical connectors capable of receiving data from external avionics LRUs 104, 304 and/or transmitting data to external avionics LRUs 104, 304 in the form of electrical signals formatted or otherwise configured in accordance with the avionics bus communications protocol (e.g., A429). The avionics bus interfaces 514 may be arranged or otherwise configured on the external FMS interfacing card 500 such that electrical communications are automatically established between the external FMS interfacing card 500 and the external avionics LRUs 104, 304 when the external FMS interfacing card 500 is inserted into the slot or port in a FMGC LRU 102, 202, 302 that was previously designed, allocated, or otherwise assigned to the legacy FMS card 110 and without the need for any additional wiring or cabling between the FMGC LRU 102, 202, 302 and the external avionics LRUs 104, 304 or any modifications to the existing wiring or cabling.

In an exemplary embodiment, the external FMS interfacing circuitry 506 is realized as an Ethernet interface including the hardware, logic, circuitry, firmware and/or software configured to support communications over an Ethernet cable coupled to an Ethernet interface 516 of the external FMS interfacing card 500. In this regard, the Ethernet circuitry 506 may be realized as an Ethernet card or Ethernet adapter, and/or may include any number of transmitters, receivers, transceivers, drivers, modulators, demodulators, multiplexers, and the like. The Ethernet interface 516 generally represents an Ethernet port or socket configured to receive an Ethernet cable 117, 317 that establishes communications between the external FMS interfacing card 500 and an external FMS LRU 108, 308. For purposes of explanation, and without limitation, the external FMS interfacing circuitry 506 may alternatively be referred to herein as Ethernet circuitry. However, it should be appreciated that in alternative embodiments, the external FMS interfacing circuitry 506 could be realized as avionics bus interface circuitry configured to support communications with the external FMS LRU 108, 308 over one or more avionics buses coupled to the external FMS interfacing card 500 in accordance with a corresponding avionics bus protocol (e.g., the A615 standard).

The shared memory 508 generally represents any sort of non-transitory computer readable storage media that can be written to and read from by the control module 502 and the FGC card 112, 312 via the memory interface circuitry 510. In this regard, the shared memory 508 may be realized as or otherwise include any sort or combination of volatile, nonvolatile, removable, and/or non-removable media implemented in any technology for storage of information such as computer readable instructions, data structures, program modules or other data, and the shared memory 508 may include, but is not limited, one or more registers, hard disks, random access memory (RAM), read only memory (ROM), flash memory, magnetic or optical storage, and the like. In one or more embodiments, the shared memory 508 may be logically separated or divided into different regions that are dedicated to hosting particular pieces of data. For example, each particular type or piece of data that is to be received by the external FMS LRU 108, 308 from an onboard avionics system 104, 304 via the FGC card 112, 312 may have a corresponding address or region of the shared memory 508 dedicated to hosting the current (or most recent) value or state for that particular instance of data. Similarly, each instance of data that is to be provided by the external FMS LRU 108, 308 to the FGC card 112, 312 may have a corresponding address or region of the shared memory 508 dedicated to hosting the current value or state for that particular instance of data.

The memory interface circuitry 510 generally represents a memory controller or other hardware, logic, circuitry, firmware and/or software configured to support external access to the shared memory 508 via a shared memory interface 512 of the external FMS interfacing card 500. In this regard, the shared memory interface 512 generally represents the pins, pads, ports, sockets, terminals, or other electrical connectors configured to support communications between the FGC card 112, 312 and the memory interface circuitry 510. In this regard, the shared memory interface 512 may be arranged or otherwise configured on the external FMS interfacing card 500 such that electrical communications are automatically established between the memory interface circuitry 510 and the FGC card 112, 312 when the external FMS interfacing card 500 is inserted into the slot or port in a FMGC LRU 102, 202, 302 that was previously designed, allocated, or otherwise assigned to the legacy FMS card 110 and without any other modifications to the wiring or cabling within the FMGC LRU 102, 202, 302.

The control module 502 generally represents the processing system, processing device, hardware, firmware, and/or other components or combinations thereof configured to support the operations of the external FMS interfacing card 500 described herein. In this regard, the control module 502 may be implemented using any suitable processing system and/or device, such as, for example, one or more processors, central processing units (CPUs), controllers, microprocessors, microcontrollers, processing cores and/or other hardware computing resources configured to support the operation described herein. The control module 502 includes or accesses a data storage element (or memory) capable of storing programming instructions for execution that, when read and executed by the control module 502, cause control module 502 to support the data communications process 400 of FIG. 4 and other tasks, functions, operations and/or processes described herein.

Referring to FIG. 5 with reference to FIG. 4, to support the data communications process 400, the control module 502 periodically polls or monitors the addresses or regions of the shared memory 508 corresponding to input operational data to be received by the FMS from the FGC card 112, 312 to identify, receive, or otherwise obtain current values or states for the operational data from such locations in the shared memory 508 (e.g., task 402). The control module 502 then encodes or formats the current operational data according to communications protocol supported by the high speed interface 117, 317 and provides the formatted operational data to the interface circuitry 506 for transmission to the external FMS LRU 108, 308 via the high speed interface 117, 317 (e.g., task 404).

For example, the FGC card 112, 312 may be coupled to the avionics LRU 104, 304 corresponding to the air data computer (ADC) to obtain operational data from the ADC (e.g., altimeter data, pressure data, etc.) and write the current or most recent value for the altimeter data to an address in the shared memory 508 associated with the current altimeter reading, the current or most recent value for the pressure data to an address in the shared memory 508 associated with the current pressure reading, and so on. The control module 502 may be configured to periodically poll those locations in the shared memory 508 at a predefined frequency (e.g., the sampling rate or refresh rate of the ADC, an operational frequency associated with the FMS algorithms or computations at the FMS card 120, 320, or the like) to obtain the current altimeter and pressure data values and communicate them to the FMS LRU 108, 308 via the Ethernet circuitry 506 and Ethernet cable 117, 317. By way of example, other input operational data received from onboard avionics 104, 304 and provided to the FMS LRU 108, 308 via the FGC card 112, 312 may include, without limitation, clock data, distance measuring equipment (DME) data, VHF omnidirectional range (VOR) data, flight augmentation computer (FAC) data, full authority digital engine control (FADEC) data, flight control unit (FCU) data, fuel quality indication (FQI) data, landing system data, global positioning inertial reference system (GPIRS) data, and the like. In this regard, the FMGC LRU 102, 202, 302 may lack avionics bus hardware for coupling a legacy FMS card 110, and thereby cards 210, 310, 500 to such sources 104, 304 of operational data.

The control module 502 is also configured to support communications between the external FMS LRU 108, 308 and the avionics systems 104, 304, 306 coupled to the avionics bus interface 514. In this regard, the FMS card 120 (or a processing system provided thereon) may transmit or otherwise provide a request for a particular type of data (or alternatively, a request for data from a particular data source) to the FMGC LRU 102, 202, 302 via the high speed interface 117, 317, which, in turn is received by the control module 502 via the interface circuitry 506. In response to receiving a data request from the external FMS card 120 and/or external FMS LRU 108, 308, the control module 502 transmits or otherwise provides a request for the current data from the appropriate avionics source 104, 304 utilizing the appropriate avionics communications protocol (e.g., A429). In response to receiving the requested current operational data from an avionics LRU 104, 304 via the avionics bus interface circuitry 504, the control module 502 converts or otherwise reformats the received operational data from the avionics bus communications protocol to the high speed interface communications protocol and then provides the requested data back to the external FMS card 120 and/or external FMS LRU 108, 308 via the interfacing circuitry 506 and high speed interface 117, 317.

For example, the FMGC LRU 102, 202, 302 may be configured to that the legacy FMS card 110, and thereby the external FMS interfacing card 500, is coupled to the avionics LRU 104, 304 including the aircraft communications addressing and reporting system (ACARS) to allow the control module 502 to obtain ACARS data via the avionics bus interface circuitry 504 in response to a request from the external FMS card 120 and/or external FMS LRU 108, 308 when the external FMS interfacing card 500 is inserted into the slot or port in a FMGC LRU 102, 202, 302 that was previously designed, allocated, or otherwise assigned to the legacy FMS card 110. By way of example, other input operational data received from onboard avionics 104, 304 via the avionics bus interface circuitry 504 may include, without limitation, air traffic services unit (ATSU) data, management control and display unit (MCDU) data, weight and balance system (WBS) data, and the like. In this regard, the FMGC LRU 102, 202, 302 may include or otherwise be coupled to avionics bus hardware for coupling a legacy FMS card 110, and thereby cards 210, 310, 500 (when substituted for a legacy FMS card 110) to such sources 104, 304 of operational data.

Referring again to FIGS. 4-5, the control module 502 is also configured to support receiving flight guidance commands or other commands or data from the external FMS LRU 108, 308 (e.g., task 406) and transmitting or otherwise providing such commands or data to the FGC card 112, 312 or onboard avionics systems 104, 306 (e.g., task 408). For example, as described above, a processing system at the FMS card 120 may implement or otherwise perform computations, predictions, or other algorithms pertaining to navigation, flight planning, flight guidance, and the like on or using the operational data received from the avionics LRUs 104, 304 via the external FMS interfacing card 500 to generate corresponding commands or data for operating the aircraft in a manner that is influenced by or responsive to the current values or states of such input operational data. The processing system at the FMS card 120 then transmits or otherwise provides the computed commands or data back to the external FMS interfacing card 500 via the high speed interface 117, 317.

The control module 502 receives or otherwise obtains the commands or data from the external FMS card 120 via the interface circuitry 506 and then transmits or otherwise provides the commands or data to the appropriate destination. In this regard, for commands or data having a destination avionics LRU 104, 306 that is coupled to the external FMS interfacing card 500 via an avionics bus, the control module 502 converts or otherwise reformats the commands or data received from the external FMS card 120 from the high speed interface communications protocol into the appropriate avionics bus communications protocol (e.g., A429) prior to transmission via the avionics bus interface circuitry 504. For example, display commands or data may be routed from an external FMS card 120 and/or an external FMS LRU 108, 308 via the external FMS interfacing card 500 to an existing MCDU or other legacy display device 106 onboard the aircraft to thereby allow an upgraded external FMS LRU 108, 308 and/or an upgraded external FMS card 120 to display information. Thus, the visualizations or graphical representations that may be presented on cockpit displays can be modernized or upgraded without modifying the wiring, cables, or other existing connections to/from the existing onboard displays and without requiring wiring, cables, or other connections between the upgraded external FMS LRU 108, 308 and/or the upgraded external FMS card 120 and the existing onboard displays.

For commands or data intended for the FGC card 112, 312 or another avionics LRU 104, 306 that is coupled to the external FMS interfacing card 500 via an avionics bus, the control module 502 may decode the command or data received from the external FMS card 120 into a raw or unencoded format and stores the particular command or data value the address or region of the shared memory 508 associated with that particular command or piece of data. The FGC card 112, 312 may then periodically poll or monitor the addresses or regions of the shared memory 508 corresponding to commands or data to be received from the FMS to identify, receive, or otherwise obtain current values or states for those commands or data from such locations in the shared memory 508. For example, the control module 502 may write received flight guidance commands from the external FMS card 120 to an address (or address range) in the shared memory 508 associated with flight guidance commands, which, in turn, is periodically monitored by the FGC card 112, 312 to obtain the most recent or updated flight guidance commands. In this manner, flight guidance commands for the FGC card 112, 312 may be routed from an external FMS card 120 and/or an external FMS LRU 108, 308 via the external FMS interfacing card 500 provided within the FMGC LRU 102, 302 in lieu of a legacy FMS card 110, and without requiring reconfiguration of the FGC card 112, 312 or other modifications to account for the absence of the legacy FMS card 110. Thus, a legacy FGC card 112, 312 and legacy FMGC LRU 102, 302 can support an upgraded external FMS LRU 108, 308 and/or an upgraded external FMS card 120 without any modifications to the FGC card 112, 312 or other modifications to the legacy FMGC LRU 102, 302 other than those necessary to accommodate the high speed interface 117, 317.

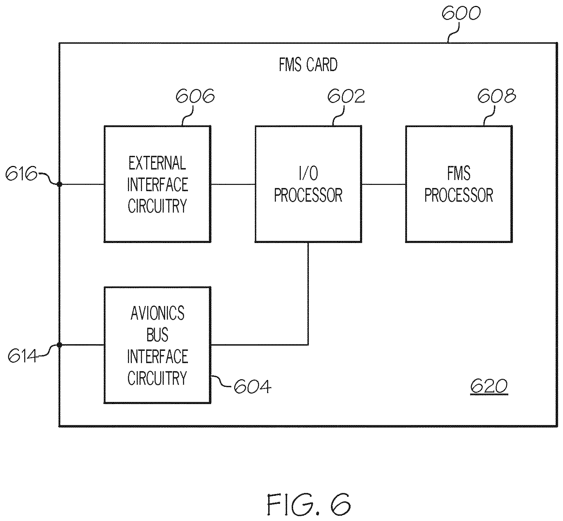

FIG. 6 depicts an exemplary embodiment of an external FMS card 600 suitable for use as the FMS card 120, 320 in any one of the aircraft systems 100, 200, 300 of FIGS. 1-6. The FMS card 600 may be realized as a computer card, integrated circuit, or other integrated electronic component or unit that may be provided within an FMS LRU 108, 308 and configured to support the subject matter described herein. The illustrated FMS card 600 includes, without limitation, a communications control module 602, avionics bus interface circuitry 604, high speed interface circuitry 606, and a flight management control module 608. In one or more embodiments, the elements 602, 604, 606, 608 are mounted to, affixed to, soldered to, or otherwise provided on a common circuit board or other suitable electronics substrate 620 to provide the FMS card 600 that may be housed in an FMS LRU 108, 308.

The high speed interface circuitry 606 generally corresponds to the high speed interface circuitry 506 of the external FMS interfacing device 500 that the FMS card 600 communicates with over the high speed interface 117, 317. In this regard, in one or more exemplary embodiments, the high speed interface circuitry 606 is realized as Ethernet interface circuitry configured to support communications over an Ethernet cable coupled to an Ethernet interface 616 of the FMS card 600, and accordingly, the high speed interface circuitry 606 may alternatively be referred to herein without limitation as Ethernet interface circuitry.

The communications control module 602 generally represents the processing system, processing device, hardware, firmware, and/or other components or combinations thereof that are coupled to the Ethernet interface circuitry 606 configured to support communications with a card 110, 210, 310, 500 within the FMGC LRU 102, 202, 302 over the Ethernet interface 117, 317, and accordingly, the communications control module 602 may alternatively be referred to herein as an input/output (I/O) processor. In exemplary embodiments, the I/O processor 602 is also coupled to the avionics bus interface circuitry 604 to support communications with onboard avionics systems independently of the FMGC LRU 102, 202, 302. In this regard, the avionics bus interface circuitry 604 generally represents the hardware, logic, circuitry, firmware and/or software configured to support communications over one or more avionics buses coupled to corresponding avionics bus interfaces 614 of the FMS card 600 in accordance with a corresponding avionics bus protocol. For example, as described above, the avionics bus interface circuitry 604 may support the ARINC 661 (A661) standard to support coupling the FMS card 600 and/or the external FMS LRU 108, 308 directly to one or more onboard avionics display devices 106. That said, in some embodiments, the avionics bus interface circuitry 604 may also support other avionics communications protocols for communicating with other onboard avionics systems, which in some instances, may be new or upgraded avionics systems that are not coupled to the FMGC LRU 102, 202, 302. In such embodiments, the I/O processor 602 and the FMS card 600 may be utilized to route operational data from such onboard avionics systems to the FGC card 112, 312 or other onboard avionics systems via the Ethernet interface 117, 317, the interfacing card 110, 210, 310, 500, and the shared memory interface in a similar manner as described above.

The flight management control module 608 generally represents the processing system, processing device, hardware, firmware, and/or other components or combinations thereof that are coupled to the I/O processor 602 to receive operational data from onboard avionics systems or the onboard FGC and perform corresponding computations, predictions, or other algorithms pertaining to navigation, flight planning, flight guidance, and the like on or using the received operational data. Accordingly, the flight management control module 608 may alternatively be referred to herein as the FMS processor. The FMS processor 608 generally includes or otherwise accesses a data storage element or other computer readable media storing computer-executable programming instructions that, when read and executed by the FMS processor 608, cause the FMS processor 608 to generate or otherwise facilitate FMS software configured to perform or otherwise support the tasks, operations, functions, and processes described herein. By allocating communications tasks to the I/O processor 602, the FMS processor 608 may be optimized to support the FMS algorithms and related flight management operations, while the I/O processor 602 may be optimized to support communications to/from the FMS card 600. In this regard, the processors 602, 608 may utilize different clock frequencies, different caching or memory techniques, or other different performance parameters to achieve a desired level of performance.

Although not illustrated in FIG. 6, in some embodiments, the shared memory 508 and shared memory interface circuitry 510 may implemented on or at the FMS card 600. In such embodiments, the shared memory interface circuitry 510 may be configured or otherwise coupled to the high speed interface 117, 317 in a manner that allows the FGC card 112, 212, 312 to utilize the high speed interface 117, 317 like the shared memory interface 114, 314 to communicate data to/from the shared memory 508 hosted at the FMS card 600.

For the sake of brevity, conventional techniques related to flight management systems, avionics systems, avionics standards, avionics installations, retrofitting, communications protocols, encoding and/or decoding, formatting, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly coupled to one another, additional intervening elements, devices, features, or components may be present in an embodiment of the depicted subject matter. In addition, certain terminology may also be used in the following description for the purpose of reference only, and thus are not intended to be limiting.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A flight management system interface device comprising:
a data storage element including a shared memory region (316, 508);
a shared memory interface (314, 510) to write current operational data pertaining to an aircraft to the shared memory region;
external interfacing circuitry (506) to support an external interface (516); and
a control module (502) coupled to the data storage element and the external interfacing circuitry to periodically poll the shared memory region to obtain the current operational data and transmit the current operational data to an external flight management system using the external interface (516).

2. The flight management system interface device of claim 1, wherein one of a throughput, a data rate or a bandwidth associated with the external interface is greater than a corresponding one of a throughput, a data rate or a bandwidth associated with the shared memory interface (314, 512).

3. The flight management system interface device of claim 1, wherein:
the data storage element includes a second shared memory region different than the shared memory region; and
the control module is configured to receive a flight guidance command from the external interface and write the flight guidance command to the second shared memory region.

4. The flight management system interface device of claim 1, further comprising avionics bus interface circuitry (504) coupled to an avionics system over an avionics bus, wherein the control module is coupled to the avionics bus interface circuitry to receive a request for second operational data from the external flight management system via the external interface and request the second operational data from the avionics system using the avionics bus interface circuitry.

5. The flight management system interface device of claim 4, wherein:
the data storage element includes a second shared memory region different than the shared memory region;
the control module is configured to receive a flight guidance command from the external interface and write the flight guidance command to the second shared memory region; and
the flight guidance command is influenced by the second operational data.

6. The flight management system interface device of claim 1, further comprising avionics bus interface circuitry (504) coupled to an avionics system over an avionics bus, wherein the control module is coupled to the avionics bus interface circuitry to receive second operational data from the external flight management system via the external interface and provide the second operational data to the avionics system using the avionics bus interface circuitry.

7. A line replaceable unit (LRU) (102, 202, 302) for an aircraft, the LRU (102, 202, 302) comprising:
a communications interface (116) for coupling to a flight management systems (FMS) LRU (108, 308);
a first card (310, 500) coupled to the communications interface and including shared memory communicatively coupled to a shared memory interface (314, 512); and
a flight guidance card (112, 312) communicatively coupled to one or more onboard systems (104, 304) to obtain operational data for the aircraft from the one or more onboard systems (104, 304) and provide the operational data to the first card via the shared memory interface (314, 512), wherein the first card is configured to retransmit the operational data to the FMS LRU (108, 308) via the communications interface (116).

8. The LRU of claim 7, wherein the first card (310, 500) comprises a legacy FMS card (102).

9. An aircraft system comprising:
a flight management and guidance computer (FMGC) line replaceable unit (LRU) (102, 202, 302) including one or more avionics interfaces coupled to one or more onboard systems (104, 304) and a first communications interface (116); and
a flight management system (FMS) LRU (108, 308) including a second communications interface (118) coupled to the first communications interface (116).

10. The aircraft system of claim 9, wherein the second communications interface is coupled to the first communications interface via an electrical connection having at least one of a throughput, a data rate or a bandwidth greater than the one or more avionics interfaces.

11. The aircraft system of claim 9, wherein the second communications interface is coupled to the first communications interface using an Ethernet cable or an ARINC 615 (A615) avionics bus.

12. The aircraft system of claim 9, wherein the FMGC LRU includes:
a first card (310, 500) coupled to the first communications interface and including shared memory (316, 508) communicatively coupled to a shared memory interface (314, 512); and
a flight guidance card (112, 312) communicatively coupled to the one or more avionics interfaces to obtain operational data for an aircraft from the one or more onboard systems (104, 304) onboard the aircraft and provide the operational data to the first card via the shared memory interface (314, 512), wherein the first card is configured to retransmit the operational data to the FMS LRU (108, 308) via the first communications interface.

13. The aircraft system of claim 12, wherein the first card is configured to receive at least one of flight guidance commands and flight management data from the FMS LRU (108, 308) via the first communications interface and provide the at least one of the flight guidance commands and the flight management data to the flight guidance card (112, 312) via the shared memory interface (314, 512).

14. The aircraft system of claim 9, wherein the FMS LRU (108, 308) includes a FMS card comprising an input/output (I/O) processor coupled to the second communications interface and a flight management (FM) processor coupled to the I/O processor.

15. The aircraft system of claim 9, wherein the FMGC LRU comprises:
an interfacing card (500) comprising:
a data storage element including a shared memory region (508);
a shared memory interface (314, 512);
external interfacing circuitry (506) coupled to the FMS LRU (108, 308) via the first communications interface (516); and
a control module (502) coupled to the data storage element and the external interfacing circuitry to periodically poll the shared memory region to obtain current operational data from the shared memory region and transmit the current operational data to the FMS LRU (108, 308) via the first communications interface; and
a flight guidance card (112, 312) communicatively coupled to the shared memory interface (314, 512) and the one or more onboard systems (104, 304) via the one or more avionics interfaces coupled to obtain the current operational data from the one or more onboard systems (104, 304) and write the current operational data to the shared memory region via the shared memory interface (314, 512).
